# EUROPÄISCHE PATENTSCHRIFT

(11) **EP 1 943 296 B1**
(45) Veröffentlichungstag und Bekanntmachung des Hinweises auf die Patenterteilung: **24.02.2010**
(21) Anmeldenummer: 06807176.0
(22) Anmeldetag: 12.10.2006
(51) Int. Cl.: C08J 3/12, C09D 177/00

(54) **VERFAHREN ZUR HERSTELLUNG VON ULTRAFEINEN PULVERN AUF BASIS VON POLYAMIDEN, ULTRAFEINEN POLYAMIDPULVERN SOWIE DEREN VERWENDUNG**
PROCESS FOR PRODUCING ULTRAFINE POWDERS BASED ON POLYAMIDES, ULTRAFINE POLYAMIDE POWDERS AND THEIR USE
PROCEDE DE FABRICATION DE POUDRES ULTRAFINES A BASE DE POLYAMIDES, POUDRES ULTRAFINES DE POLYAMIDE ET LEUR UTILISATION

(30) Priorität: 04.11.2005 DE 102005053071
(43) Veröffentlichungstag der Anmeldung: 16.07.2008
(73) Patentinhaber: Evonik Degussa GmbH, 45128 Essen (DE)
(72) Erfinder: HÄGER, Harald, 59348 Lüdinghausen Seppenrade (DE); BAUMANN, Franz-Erich, 48249 Dülmen (DE); LORTZ, Wolfgang, 63607 Wächtersbach (DE); BATZ-SOHN, Christoph, 63454 Hanau-Mittelbuchen (DE)
(86) Internationale Anmeldenummer: PCT/EP2006/067308
(87) Internationale Veröffentlichungsnummer: WO 2007/051691

(56) Entgegenhaltungen:
- EP-A1- 0 548 969
- EP-A2- 0 949 290
- DE-A1- 3 510 687
- DE-A1- 3 510 690

## Beschreibung

Die vorliegende Erfindung liegt auf dem Gebiet der Polyamidfeinpulver.

Insbesondere bezieht sich die Erfindung auf Verfahren zur Herstellung von ultrafeinen Pulvern auf Basis von Polyamiden, bei welchen man Polyamide mit einer relativen Lösungsviskosität ηᵣₑₗ im Bereich von 1,5 bis 2,0, gemessen in 0,5 %-iger m-Kresollösung bei 25 °C, unter Einwirkung von Druck und/oder Temperatur zur Erzeugung einer zumindest teilweisen Lösung mit einem alkoholischen Medium in Gegenwart von anorganischen Partikeln in Berührung bringt und anschließend das Polyamid aus der zumindest teilweisen Lösung ausfällt. Zur Erfindung gehören ferner Polyamidfeinpulver, die eine hohe BET-Oberfläche und eine Schüttdichte aufweisen, die im Bereich von Standardpolyamidfällpulvern liegt, sowie die Verwendung der Polyamidfeinpulver.

Pulver auf Polyamid-Basis, zum Beispiel für Beschichtungen oder zur Erzeugung von Formteilen, zeichnen sich durch ihre hohe Chemikalienbeständigkeit sowie sehr gute mechanische Eigenschaften aus. Dabei sind Pulver, die durch Umfällen aus ethanolischer Lösung erhalten werden, z.B. nach DE-A 2906647, hinsichtlich ihres Verarbeitungsverhaltens solchen Produkten überlegen, die aus einem Mahlprozess, z.B. nach DE-A 1570392, erhalten werden, da die Fällung zu runderen und damit besser fluidisierbaren Partikeln führt. Außerdem besitzen Mahlpulver, wie man sie z.B. auch nach DE-C 2855920 erhält, eine breite Korngrößenverteilung, welche wiederum einen hohen Klassieraufwand bedingt. Ein weiterer Vorteil der Fällpulver besteht in der großen Variationsbreite des Molekulargewichts (ηᵣₑₗ = 1.5 - 2.0), während Mahlpulver nur bei einem ηᵣₑₗ < 1.7 wirtschaftlich herstellbar sind.

Die Polyamidfeinpulver sollen idealer Weise einer ganzen Reihe von Anforderungen genügen. So wäre es erstrebenswert, bei hinreichender Feinheit der Pulver eine hohe BET-Oberfläche mit einer großen Schüttdichte zu verquicken.

Beispielsweise wäre eine hohe BET Oberfläche in vielen Fällen wünschenswert, um die Haftung des Pulvers gegenüber zu beschichtenden Oberflächen zu verbessern oder um so zu einer verbesserten Aufnahme von Pigmenten oder Additiven aller Art zu führen.

Auch bei dem sogenannten Lasersinterverfahren zur Herstellung von Bauteilen aus Polyamidfeinpulvern ist eine hohe BET-Oberfläche von Vorteil, da somit die Möglichkeit der Haftung zwischen den Pulverpartikeln erhöht werden kann.

Leider gehen jedoch bislang die Vorteile einer hohen BET Oberfläche zwingend mit einer Schüttdichte einher, die eine reibungslose Verarbeitung in bestehenden Prozessen erschwert. Normalerweise sind hohe Schüttdichte und hohe BET-Oberfläche zwei Anforderungen, die sich widersprechen. Pulver auf Polyamidbasis, die beiden Anforderungen gerecht werden, sind nach dem derzeit bekannten Stand der Technik nicht herstellbar. DE-A 19708946 beschreibt zwar Polyamidfeinpulver mit hoher Schüttdichte, die durch einen zweistufigen Fällprozess erhalten wurden, aber diese Pulver weisen nach wie vor eine niedrige BET Oberfläche auf.

Auch Kombinationen von Polyamidpulvern mit anorganischen Pigmenten (z.B. Titandioxid) weisen zwar eine hohe Schüttdichte auf, sind aber weder Feinpulver, noch zeigen sie eine hohe BET-Oberfläche.

Ebenso wenig führt die bloße Anwesenheit von partikulären Substanzen während des Umfällens von Polyamiden zu der gewünschten Kombination von Eigenschaften. So offenbart die DE-A 3510690 Polyamidpulver die nach einem Fällungsverfahren aus Ethanol erhalten werden, gemäß Beispielen der genannten DE-A 3510690 u.a. in Gegenwart von Weißpigment (partikulärem Titandioxid). Allerdings zeigen Messungen, dass entsprechend diesem Beispiel erhaltene Pulver entweder relative gute Schüttdichten in Verbindung mit sehr geringer BET Oberfläche oder ausreichende BET Oberflächen, jedoch dann zu Lasten einer nicht mehr ausreichend hohen Schüttdichte aufweisen. Ein Polyamidfeinpulver mit einer Kombination aus hoher BET Oberfläche und einer Schüttdichte zwischen 250 und 1000 g/L wird durch die DE-A 3510690 nicht zugänglich gemacht.

In Anbetracht des dargelegten Standes der Technik war es Aufgabe der Erfindung ein Verfahren zur Herstellung von Feinpulvern auf Basis von Polyamid anzugeben, welche bei ausreichender Feinheit eine hohe BET-Oberfläche mit ausreichend guter Verarbeitbarkeit, d.h. einer Schüttdichte im gewünschten Bereich, paaren.

Eine weitere Aufgabe bestand in der Bereitstellung von Polyamidfeinpulvern mit hoher BET-Oberfläche in Kombination mit ausreichend hoher Schüttdichte.

Noch eine Aufgabe lag in der Angabe von Verwendungsmöglichkeiten der erfindungsgemäßen Polyamidfeinpulver. So sollen die Feinpulver auf Basis von Polyamid nach einfachen bekannten Verfahren Bauteile und Formkörper zugänglich machen, die über erhöhte Festigkeitswerte wie E-Modul oder Zugfestigkeit aber auch über sehr gute Schlagzähigkeitseigenschaften verfügen.

Gelöst werden diese sowie weitere nicht näher genannte, sich jedoch ohne weiteres aus der Diskussion des Standes der Technik ergebende Aufgaben, mit einem Verfahren mit den Merkmalen des Anspruchs 1. Im Bezug auf das Produkt gibt der unabhängige Anspruch der entsprechenden Kategorie eine Lösung der erfindungsgemäßen Aufgabe an. Im Hinblick auf die Verwendungsmöglichkeiten werden Lösungen durch die entsprechenden Ansprüche offenbart.

Dadurch, dass man bei einem Verfahren zur Herstellung von ultrafeinen Pulvern auf Basis von Polyamiden, bei welchem man Polyamide mit einer relativen Lösungsviskosität ηᵣₑₗ im Bereich von 1,5 bis 2,0, gemessen in 0,5 %-iger m-Kresollösung bei 25 °C, unter Einwirkung von Druck und/oder Temperatur zur Erzeugung einer zumindest teilweisen Lösung mit einem alkoholischen Medium in Gegenwart von anorganischen Partikeln in Berührung bringt und anschließend das Polyamid aus der zumindest teilweisen Lösung ausfällt, eine Suspension der anorganischen Partikel im alkoholischen Medium einsetzt, gelingt es auf nicht ohne weiteres absehbare Weise erstmalig Feinpulver auf Basis von Polyamid zugänglich zu machen, die dem eingangs erörterten Eigenschaftsprofil genügen.

Im Rahmen der Erfindung konnten verarbeitungsfähige Polyamidfeinpulver mit hoher Schüttdichte und hoher BET-Oberfläche erhalten werden, indem die Polyamidfällung (Umfällung des Polyamids) in einer alkoholischen Suspension durchgeführt wurde, die anorganische Partikel enthielt. Im Gegensatz zur DE-A 3510690, bei der beispielsweise eine Fällung zwar auch in Gegenwart von Partikeln (Weißpigment) durchgeführt wurde, wird gemäß dem Verfahren der Erfindung eine Suspension der Partikel erzeugt und die Umfällung des Polyamids wird in Gegenwart dieser Suspension der Partikel ausgeführt. Hierbei wird als überraschendes Ergebnis ein optimal verarbeitbares Polyamidfeinpulver mit den erwünschten Eigenschaften im Hinblick auf BET-Oberfläche und Schüttdichte erhalten.

Nach der erfindungsgemäßen Vorgehensweise resultieren Polyamidfeinpulver in Kombination mit anorganischen Partikeln.

Dabei ist der Einsatz von anorganischen Partikeln, die in Suspension in einem alkoholischen Medium vorliegen, von besonderer Bedeutung für das Verfahren der Erfindung. In einer bevorzugten Verfahrensvariante ist das Verfahren der Erfindung dadurch ausgezeichnet, dass man eine Suspension aus im alkoholischen Medium suspendierten anorganischen Partikeln einsetzt, wobei die Partikel eine mittlere Teilchengröße d₅₀ im Bereich von 0,001 bis 0,8 µm aufweisen, gemessen in Suspension im alkoholischen Medium als volumengewichteter Medianwert der Peakanalyse mittels statischer oder dynamischer Lichtstreuung. Noch mehr bevorzugt werden Suspensionen anorganischer Partikel verwendet, wobei die Partikel eine Größe d₅₀ im Bereich von 0,005 bis 0,5 µm und ganz besonders bevorzugt im Bereich von 0,01 bis 0,3 µm aufweisen. Die Partikelgröße wie angegeben wird nach bekannten Meßmethoden mittels statischer oder dynamischer Lichtstreuung in der Suspension bestimmt. Bei den über Lichtstreuverfahren erhaltenen Werten kann es sich um isolierte Partikel oder auch um Agglomerate von primären Partikeln in der Suspension handeln. Erheblich für die Erfindung ist, dass die tatsächlich in der Suspension enthaltenen Teilchen, seien es Primärpartikel oder Agglomerate, einen d₅₀ Wert im angegebenen Bereich aufweisen. Die Messung der Teilchengröße kann beispielsweise mit einem Zetasizer 3000 Hsa (Malvern Instruments, UK) erfolgen. Liegt die Partikelgröße oberhalb eines d₅₀ Wertes von 0,8 µm ist die Gefahr groß, dass keine Feinpulver resultieren. Es könnten dann bei der Umfällung unter Umständen zu große Polyamidpulverpartikel resultieren.

Die Natur der als anorganische Partikel im Sinne der Erfindung einsetzbaren Verbindungen kann über einen weiten Bereich variieren. Von großem Interesse sind solche Verfahren bei denen man eine Suspension einsetzt mit im alkoholischen Medium suspendierten anorganischen Partikeln ausgewählt aus der Gruppe bestehend aus Al₂O₃, TiO₂, ZrO₂, SiO₂, ZnO, Bi₂O₃, CeO₂, ITO (Indiumoxid dotiert mit Zinn(IV)oxid), ATO (Zinn(IV)oxid dotiert mit Antimonoxid), IZO (Indiumoxid dotiert mit Zinkoxid), Bornitrid, Borcarbid, Mischoxiden und Spinellen. Besonders bevorzugt ist der Einsatz von Aluminiumoxid (Al₂O₃).

In diesem Zusammenhang kann das Aluminiumoxid vorzugsweise von pyrogener Herkunft sein. Unter pyrogen ist dabei zu verstehen, dass entsprechende Aluminiumoxidpulver durch Umsetzung eines geeigneten Ausgangsmaterials in einer Flamme erhalten wird. Pyrogene Verfahren umfassen die Flammenoxidation und die Flammenhydrolyse. Zur großtechnischen Herstellung von Aluminiumoxid dient vor allem die Flammenhydrolyse von Aluminiumchlorid in einer Wasserstoff-/Sauerstoffflamme. In der Regel liegen die auf diese Weise hergestellten Aluminiumoxidpartikel in Form aggregierter Primärpartikel vor, wobei die Primärpartikel frei von Poren sind und Hydroxylgruppen auf ihrer Oberfläche tragen. Bei der Umsetzung von Aluminiumchlorid zu Aluminiumoxid entsteht als Nebenprodukt Salzsäure, die an den Aluminiumoxidpartikeln anhaftet. Gewöhnlich wird durch eine Behandlung mit Wasserdampf ein Großteil der Salzsäure von den Partikeln entfernt.

Zu besonders für die Erfindung geeigneten Aluminiumoxidpulvern gehören unter anderem: AEROXIDE® Alu C, AEROXIDE® Alu 65, AEROXIDE® Alu 130, alle Degussa AG, SpectrAl™ 100 Fumed Alumina, SpectrAl™ 51 Fumed Alumina, SpectrAl™ 81 Fumed Alumina, alle Cabot Corp..

Eine zweckmäßige Verfahrensvariante sieht vor, dass man eine Suspension einsetzt, die dadurch erhältlich ist, dass man anorganische Partikel mit einer spezifischen Oberfläche im Bereich von 5 bis 200 m²/g im alkoholischen Medium suspendiert.

Die anorganischen Partikel werden als Suspension in alkoholischem Medium eingesetzt. Zum Erhalt einer Suspension werden die Partikel im alkoholischen Medium feinverteilt. Dies geschieht nach an sich bekannten Verfahren. Dabei sind Verfahren, die einen hohen Energieeintrag ermöglichen, besonders bevorzugt. Solche Verfahren sind z.B. in der Deutschen Patentanmeldung 103 60 766 oder der Deutschen Patentanmeldung 10 2005 032 427.4 beschrieben.

In bevorzugter Ausführungsform zeichnet sich das Verfahren der Erfindung dadurch aus, dass man eine Suspension einsetzt, erhältlich durch Suspendieren der anorganischen Partikel im alkoholischen Medium unter Einbringung eines Energieeintrages von größer als 1000 kJ/m³. Hierdurch entstehen im Allgemeinen schon sehr brauchbare Suspensionen der Partikel im Alkohol. Der angesprochene Energieeintrag lässt sich durch bekannte Aggregate bewerkstelligen. Geeignete Aggregate können sein: Planetenkneter, RotorStator-Maschinen, Rührwerkkugelmühle, Walzenstuhl und dergleichen.

Als besonders geeignet hat sich auch eine Vorgehensweise erwiesen, bei der man die Suspension zunächst mit einem Energieeintrag von weniger als 1000 kJ/m³ unter Bildung einer Vorsuspension herstellt, die Vorsuspension in mindestens zwei Teilströme aufteilt, diese Teilströme in einer Hochenergiemühle unter einen Druck von mindestens 500 bar setzt, über eine Düse entspannt und in einem gas- oder flüssigkeitsgefüllten Reaktionsraum aufeinandertreffen lässt und gegebenenfalls die Hochenergievermahlung ein oder mehrere Male wiederholt.

Die Menge an anorganischen Partikeln in der Suspension kann über einen weiten Bereich variieren. Je nach Partikelart, Größe der anorganischen Partikel sowie spezieller Natur des alkoholischen Mediums können kleinere Feststoff- oder größere Feststoffgehalte sinnvoll sein. Im Allgemeinen wird es jedoch zweckmäßig sein, möglichst feststoffreiche Suspensionen für die Zwecke der Erfindung einzusetzen. In vorteilhafter Verfahrensmodifikation setzt man eine Suspension ein, welche einen Gehalt an Partikeln im Bereich von 10 bis 60 Gew.-% aufweist, bezogen auf das gesamte Gewicht der Suspension. Zu besonders günstig einsetzbaren Suspensionen zählen solche mit einem Feststoffgehalt von 15 bis 50 Gew.-%, noch zweckmäßiger 20 bis 50 Gew.-%.

Die im erfindungsgemäßen Verfahren involvierten Suspensionen von anorganischen Partikeln in alkoholischen Medien sollen möglichst stabil sein. Dabei wird unter besonders stabil im Sinne der Erfindung die Stabilität der Suspension gegen Sedimentation und Reagglomeration innerhalb eines Zeitraums von einem Monat, in der Regel von mindestens sechs Monaten verstanden.

Zur Erzielung besonders stabiler Suspensionen hat es sich weiterhin als vorteilhaft erwiesen, wenn bei der Verteilung der anorganischen Partikel im alkoholischen Medium Additive anwesend sind, welche die Suspension stabilisieren können.

Derartige Additive sind z.B. Phosphorsäure und deren ein- oder zweibasischen Phosphate, Phosphorsäureester, Phosphonsäuren, organisch modifizierte Phosphonsäure, Schwefelsäure und deren Derivate, Salpetersäure, allgemein organische Mineralsäuren. Des weiteren können organische Verbindungen mit aciden Protonen wie z.B. Carbonsäuren oder Phenole eingesetzt werden. Auch basische organische Verbindung z.B. auf der Basis von Aminen, sind geeignet.

Die für die Erfindung nützlichen Suspensionen werden in einem alkoholischen Medium erzeugt. Hierbei kann es sich um einen reinen Alkohol, eine Mischung von mehreren Alkoholen oder auch um Alkohole mit einem Gehalt an Wasser oder anderen die erwünschte Umfällung der Polyamide im Wesentlichen nicht nachteilig beeinflussende Substanzen handeln. Das alkoholische Medium der erfindungsgemäßen Suspensionen weist bevorzugt einen Gehalt von kleiner als 50 Gew.-% nicht alkoholischer Substanzen (vorzugsweise Wasser), besonders bevorzugt weniger als 10 Ges.-% und besonders zweckmäßig weniger als 1 Gew.-% fremder nicht alkoholischer Substanzen auf. Für die Erfindung in Frage kommen generell alle Arten von Alkoholen oder Gemische davon, die eine Umfällung der Polyamide unter den erwünschten Bedingungen (Druck und Temperatur) zulassen. Im Einzelfall ist es für den Fachmann ohne größeren Aufwand möglich das System an spezielle Erfordernisse anzupassen. Bevorzugt werden für das Verfahren der Erfindung als alkoholisches Medium für die Umfällung des Polyamids und/oder die Suspension der anorganischen Partikel ein oder mehrere Alkohole verwendet, die ein Zahlenverhältnis von Sauerstoffatomen zu Kohlenstoffatomen im Bereich von 1:1 bis 1:5 aufweisen.

Typische Alkohole zur Herstellung der Suspension der anorganischen Partikel sind solche mit einem Verhältnis von Sauerstoff zu Kohlenstoff von 1:1, 1:2, 1:3 , 1:4 und 1:5, bevorzugt solche mit einem Sauerstoff zu Kohlenstoffverhältnis von 1:2 und 1:3, besonders bevorzugt mit einem Sauerstoff zu Kohlenstoffverhältnis von 1:2. Ganz besonders zweckmäßig kommt Ethanol zum Einsatz bei der Herstellung einer Suspension der anorganischen Partikel sowie bei der Umfällung der Polymamide.

Bei den gemäß der Erfindung umfällbaren Polyamiden (mithin also als Ausgangsstoffe einsetzbaren Verbindungen) handelt es sich um die ganze Bandbreite der bekannten und verfügbaren Substanzen. Bevorzugt als Ausgangsmaterial für das Verfahren der Erfindung einsetzbare Polyamide umfassen unter anderem Polyamid 11, Polyamid 12 und Polyamide mit mehr als 12 aliphatisch gebundenen Kohlenstoffatomen pro Carbonamidgruppe, vorzugsweise Polyamid 12. Außerdem können die entsprechenden Copolyamide oder Mischungen aus Homo- und Copolyamiden eingesetzt werden, die mindestens 70 Gewichtsprozent der genannten Bausteine enthalten. Als Comonomere können sie demnach 0 bis 30 Gewichtsprozent eines oder mehrerer Comonomere, wie Caprolactam, Hexamethylendiamin, 2-Methyl-pentandiamin-(1,5), Octamethylendiamin-(1,8), Dodecamethylendiamin, Isophorondiamin, Trimethylhexamethylendiamin, Adipinsäure, Korksäure, Azelainsäure, Sebacinsäure, Dodecandisäure, Aminoundecansäure, enthalten. Die im folgenden als Polyamide bezeichneten genannten Homo- und Copolyamide werden als Granulate oder Schrot eingesetzt, die ein relative Lösungsviskosität zwischen 1,5 und 2,0 (gemessen in 0,5%iger m-Kresollösung bei 25°C nach DIN 53 727), bevorzugt zwischen 1,70 und 1,95, besitzen. Sie können durch Polykondensation; hydrolytische oder acidolytische bzw. aktivierte anionische Polymerisation nach bekannten Verfahren hergestellt werden. Bevorzugt werden ungeregelte Polyamide mit Endgruppenverhältnissen NH₂/COOH = 40/60 bis 60/40 eingesetzt. Das Einsatzpolyamid kann maximal 0,2 Gewichtsprozent H₃PO₄ enthalten. Bevorzugt wird H₃PO₄-freies Polyamid eingesetzt. Es können jedoch zweckmäßig auch geregelte Polyamide eingesetzt werden und zwar bevorzugt solche, bei denen das Endgruppenverhältnis NH₂/COOH 90:10 und 80:20 bzw. 10:90 und 20:80 vorliegt.

Die Lösung der Polyamide zur Umfällung kann auf alle bekannten Weisen hergestellt werden. Von Vorteil ist eine möglichst vollständige Lösung des Polyamids im alkoholischen Medium in Gegenwart der Suspension anorganischer Partikel. Die Lösung kann durch Einsatz von Druck und/oder Temperatur gefördert werden. Zweckmäßig geht man so vor, dass man das Polyamid im alkoholischen Medium vorlegt und unter Einwirkung von erhöhter Temperatur über die notwendige Zeit auflöst. Die Suspension der anorganischen Partikel kann vor, während oder nach dem Auflösen des Polyamids zugegeben werden. Zweckmäßig wird die Suspension der anorganischen Partikel zugleich mit dem Polyamid vorgelegt. Der Auflösevorgang wird günstiger Weise durch den Einsatz angepasster Rühraggregate unterstützt. Die Ausfällung des Polyamids kann ebenfalls durch Anwendung von Druck und/oder Temperatur unterstützt werden. So führen vorzugsweise eine Absenkung der Temperatur und/oder Abdestillierung (vorzugsweise unter vermindertem Druck) des Lösungsmittels, d.h. des alkoholischen Mediums, zur Fällung des Polyamids. Es ist jedoch auch möglich, die Fällung durch Zugabe eines anti-Lösungsmittels (Fällungsmittels) zu unterstützen.

Gegenstand der Erfindung ist auch ein ultrafeines Pulver auf Basis von Polyamiden, erhältlich dadurch, dass man Polyamide mit einer relativen Lösungsviskosität ηᵣₑₗ im Bereich von 1,5 bis 2,0, gemessen in 0,5%iger m-Kresollösung bei 25 °C, unter Einwirkung von Druck und/oder Temperatur zur Erzeugung einer zumindest teilweisen Lösung mit einer Suspension von anorganischen Partikeln in einem alkoholischen Medium in Berührung bringt und anschließend das Polyamid aus der zumindest teilweisen Lösung ausfällt, wobei das Polyamidpulver gekennzeichnet ist durch eine spezifische Oberfläche nach BET im Bereich von 5 - 100 m²/g, bevorzugt 10 - 25 m²/g; eine Feinheit d₅₀ von kleiner als 70 µm; eine Schüttdichte SD im Bereich von 250 bis 1000 g/l; und einen Partikelgehalt von 0,1 bis 80 Gew.-%, vorzugsweise 1 bis 60 Gew.-% anorganischer Partikel bezogen, auf das Gesamtgewicht des Polyamidpulvers.

Die BET Oberfläche wird nach DIN 66131 durch Absorption von Stickstoff nach Brunauer-Emmett-Teller bestimmt.

Die Feinheit d₅₀ wird durch Lichtstreuung im Laserstrahl mit einem Malvern Mastersizer S Version 2.18 bestimmt.

Die Schüttdichte ergibt sich gemäß DIN 53644.

Der Partikelgehalt wird durch eine Asche/Glührückstandbestimmung nach DIN EN ISO 3451 Teil 1 und Teil 4 bestimmt.

Eine Bestimmung der Lösungsviskosität erfolgte in 0,5 %-iger meta-Kresol Lösung nach DIN 307.

Bevorzugte Fällpulver weisen Schüttdichten im Bereich von 250 bis 800 und besonders bevorzugt zwischen 300 und 500 g/L auf. In diesen Bereichen besteht eine optimale Verarbeitbarkeit.

Die Polyamidfeinpulver der Erfindung zeichnen sich durch eine einzigartige Kombination der Eigenschaften aus. Zu den genannten Eigenschaften zusätzlich verfügen sie auch noch über eine relativ enge Partikelgrößenverteilung, was aus den Beispielen ersichtlich wird. Aufgrund ihrer hervorragenden Eigenschaften eignen sich die Pulver für eine ganze Reihe von Anwendungen.

Eine bevorzugte Verwendung des ultrafeinen Pulvers auf Basis von Polyamiden umfasst den Einsatz als Beschichtungsmittel. Die Pulver ergeben einwandfreie Überzüge nach allen bekannten und geeigneten Beschichtungsverfahren. Es können sowohl Wirbelsinterpulver als auch Elektrostatikpulver hergestellt werden. So zeigen die Fällpulver selbst bei der Beschichtung von schwierigen Metallteilen ausgezeichnete Eigenschaften hinsichtlich Dehnbarkeit und Kantenbeschichtungen als auch Beständigkeit gegenüber alkalischen wässrigen Lösungen. Die mechanische Festigkeit der Überzüge liegt auf exzellentem Niveau.

Die Fällpulver der Erfindung eignen sich ebenso hervorragend zur Herstellung von Formkörpern und Bauteilen. Materialien aus erfindungsgemäßen Polyamidfeinpulvern, weisen im Übrigen auch hervorragende mechanische Eigenschaften auf. So zeigen die erfindungsgemäßen Feinpulver neben erhöhten Festigkeitswerten wie E-Modul oder Zugfestigkeit auch sehr gute Schlagzähigkeitseigenschaften.

Daher umfasst die Erfindung auch die Verwendung des ultrafeinen Pulvers auf Basis von Polyamiden zur Herstellung von Formkörpern und/oder Bauteilen mannigfaltiger Form und Struktur. Hierbei kann man entweder vom Pulver selbst ausgehen und die Formkörper oder Bauteile direkt nach bekannten Umformverfahren, vorzugsweise durch Spritzguss, Extrusion oder Blasformen herstellen.

Alternativ hierzu kann man auch die Pulver zunächst granulieren und danach thermoplastisch weiterverarbeiten, wiederum nach an sich bekannten Verfahren, d.h. im Wesentlichen mittels Spritzguss, Extrusion oder Blasformen.

Nachfolgend wird die Erfindung eingehender anhand von Beispielen und Vergleichsbeispielen eingehender erläutert.

### Versuche

Herstellen beim Verfahren der Erfindung einzusetzender Suspensionen der anorganischen Partikel in alkoholischem Medium (Ethanol)

### Suspension 1 (S1):

In einem 100 1 Edelstahl-Ansatzbehälter werden 77 kg Ethanol vorgelegt. Anschließend werden bei laufender Ystral Conti-TDS 3 (Statorschlitze: 4 mm Kranz und 1 mm Kranz, Rotor/Stator-Abstand ca. 1 mm) unter Scherbedingungen 23 kg AEROXIDE^{®} Alu C (BET 100 m²/g), Fa. Degussa in den Ansatzbehälter gegeben. Nach Beendigung der Zugabe wird noch bei 3000 U/min 30 min lang nachgeschert.

Diese Vorsuspension wird in zwei Durchgängen durch die Hochenergiemühle Sugino Ultimaizer HJP-25050 bei einem Druck von 2500 bar und Diamantdüsen von 0,25 mm Durchmesser geführt und dadurch intensiv weiter vermahlen.

Die Zugabe von 85%-ige Phosphorsäure, so dass eine Konzentration von 2 % reiner H₃PO₄ bezogen auf das Al₂O₃ erreicht wird, erfolgte während der Herstellung der Vorsuspension im Dissolver.

Nach dem Suspendieren wurde eine mittlere Teilchengröße d₅₀ von 0,18 µm durch dynamische Lichtstreuung ermittelt.(Zetasizer 3000 Hsa von Malvern Instrumemts, UK). Angegeben wird der volumengewichtete Median-Wert der Peakanalyse.

### Suspension 2 (S2):

In einem 100 1 Edelstahl-Ansatzbehälter werden 44 kg Ethanol und 1,00 kg H₃PO₄ (85%ig) vorgelegt. Anschließend werden bei laufender Ystral Conti-TDS 3 (Statorschlitze: 4 mm Kranz und 1 mm Kranz, Rotor/Stator-Abstand ca. 1 mm) unter Scherbedingungen 21 kg AEROXIDE^{®} Alu C (BET 100 m²/g), Fa. Degussa in den Ansatzbehälter gegeben Nach ca. 18 kg AEROXIDE^{®} Alu C wurden weitere 0,13 kg H₃PO₄ (85%ig) zugegeben, um wieder eine niedrige Viskosität zu erreichen. Nach Beendigung der Zugabe wird bei 3000 U/min 30 min lang nachgeschert. Bei 25 min Scherzeit werden weitere 1,2 kg H₃PO₄ (85%ig) zugegeben, so dass eine Konzentration von 11 % H₃PO₄ (85%ig) bezogen auf das Al₂O₃ erreicht wird.

Diese Vorsuspension wird in zwei Durchgängen durch die Hochenergiemühle Sugino Ultimaizer HJP-25050 bei einem Druck von 2500 bar und Diamantdüsen von 0,25 mm Durchmesser geführt und dadurch intensiv weiter vermahlen.

Nach dem Suspendieren wurde eine Teilchengröße d₅₀ von 0,14 µm durch dynamische Lichtstreuung ermittelt. (Zetasizer 3000 Hsa von Malvern Instrumemts, UK). Angegeben wird der volumengewichtete Median-Wert der Peakanalyse.

### Suspension 3 (S3):

In einem 100 1 Edelstahl-Ansatzbehälter werden 77 kg Ethanol vorgelegt. Anschließend werden bei laufender Ystral Conti-TDS 3 (Statorschlitze: 4 mm Kranz und 1 mm Kranz, Rotor/Stator-Abstand ca. 1 mm) unter Scherbedingungen 23 kg AEROXIDE^{®} Alu C (BET 100 m²/g), Fa. Degussa in den Ansatzbehälter gegeben. Nach Beendigung der Zugabe wird noch bei 3000 U/min 30 min lang nachgeschert.

Diese Vorsuspension wird in zwei Durchgängen durch die Hochenergiemühle Sugino Ultimaizer HJP-25050 bei einem Druck von 2500 bar und Diamantdüsen von 0,25 mm Durchmesser geführt und dadurch intensiv weiter vermahlen.

Die Zugabe der Phosphorsäure erfolgte während der Suspensionsherstellung im Dissolver. Nach dem Durchgang durch die Hochenergiemühle wurde zur weiteren Stabilisierung Cublen P 50 (ein Handelprodukt der Schwarz und Zschimmer GmbH, eine 50%ige Lösung von 2-Phosphonobutan-1,2,4-tricarborisäure in Wasser ) in einer Menge zugesetzt, so dass eine Konzentration von 2 Gew.-% Cublen P 50 bezogen auf die Al₂O₃-Menge erreicht wird.

Nach dem Suspendieren wurde eine Teilchengröße d₅₀ von 0,13 µm durch statische Lichtstreuung ermittelt (Zetasizer 3000 Hsa von Malvern Instrumemts, UK). Angegeben wird der volumengewichtete Median-Wert der Peakanalyse.

### Suspension 4 (S4):

In einem 100 1 Edelstahl-Ansatzbehälter werden 7.7 kg Ethanol vorgelegt. Anschließend werden bei laufender Ystral Conti-TDS 3 (Statorschlitze: 4 mm Kranz und 1 mm Kranz, Rotor/Stator-Abstand ca. 1 mm) unter Scherbedingungen 23 kg AEROXIDE^{®} Alu C (BET 100 m²/g), Fa. Degussa in den Ansatzbehälter gegeben. Nach Beendigung der Zugabe wird noch bei 3000 U/min 30 min lang nachgeschert.

Diese Vorsuspension wird in zwei Durchgängen durch die Hochenergiemühle Sugino Ultimaizer HJP-25050 bei einem Druck von 2500 bar und Diamantdüsen von 0,25 mm Durchmesser geführt und dadurch intensiv weiter vermahlen.

Zur Stabilisierung wird nun zu der erhaltenen Suspension unter intensivem Durchmischen 85%ige Phosphorsäure zugegeben, so dass eine Konzentration von 2 % reiner H₃PO₄, bezogen auf die Al₂O₃-Menge, erreicht wird und es wird Cublen P 50 (ein Handelprodukt der Schwarz und Zschimmer GmbH, eine 50%ige Lösung von 2-Phosphonobutan-1,2,4-tricarbonsäure in Wasser ) zugesetzt, so dass eine Konzentration von 2 Gew.-% Cublen P 50, bezogen auf die Gesamtsuspension, erreicht wird.

Nach dem Suspendieren wurde eine Teilchengröße d₅₀ von 0,06 µm durch statische Lichtstreuung ermittelt (Zetasizer 3000 Hsa von Malvern Instrumemts, UK). Angegeben wird der volumengewichtete Mediän-Wert der Peakanalyse.

### Suspension 5 (S5):

In einem 100 l Edelstahl-Ansatzbehälter werden 77 kg Ethanol vorgelegt. Anschließend werden bei laufender Ystral Conti-TDS 3 (Statorschlitze: 4 mm Kranz und 1 mm Kranz, Rotor/Stator-Abstand ca. 1 mm) unter Scherbedingungen 23 kg VP Zirkonoxid PH, Fa. Degussa in den Ansatzbehälter gegeben. Nach Beendigung der Zugabe wird noch bei 3000 U/min 30 min lang nachgeschert.

Diese Vorsuspension wird in zwei Durchgängen durch die Hochenergiemühle Sugino Ultimaizer HJP-25050 bei einem Druck von 2500 bar und Diamantdüsen von 0,25 mm Durchmesser geführt und dadurch intensiv weiter vermahlen.

Die Zugabe der Phosphorsäure erfolgte wieder während des Suspendierens am Dissolver, während die Menge von 2 Gew.-% Cublen P 50 (ein Handelprodukt der Schwarz und Zschimmer GmbH, eine 50%ige Lösung von 2-Phosphonobutan-1,2,4-tricarbonsäure in Wasser ), bezogen auf die Gesamtsuspension, zur nachträglichen Stabilisierung zugesetzt wird.

Nach dem Suspendieren wurde eine Teilchengröße d₅₀ von 0,08 µm durch statische Lichtstreuung ermittelt (Zetasizer 3000 Hsa von Malvern Instrumemts, UK). Angegeben wird der volumengewichtete Median-Wert der Peakanalyse.

Herstellen von Polyamidfeinpulvern mit hoher Schüttdichte und niedriger BET-Oberfläche (nicht erfindungsgemäße Vergleichsbeispiel A-D).

### Vergleichsbeispiel A: Zweistufige Umfällung von ungeregeltem PA 12

50 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH₂ werden mit 310 L Ethanol, vergällt mit 2-Butanon und 1 % Wassergehalt, innerhalb von 5 Stunden in einem 0,8 m³-Rührkessel auf 145 °C gebracht und unter Rühren (Blattrührer, d= 80 cm, Drehzahl= 49 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten. Die Innentemperatur wird mit gleicher Kühlrate auf 117 °C gebracht und dann 60 Minuten konstant gehalten. Danach wird weiter bei einer Kühlrate von 40 K/h abdestilliert und so die Innentemperatur auf 111 °C gebracht. Bei dieser Temperatur setzt die Fällung, erkennbar an der Wärmeentwicklung. Die Destillationsgeschwindigkeit wird soweit erhöht, dass die Innentemperatur nicht über 111.3 °C ansteigt. Nach 25 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt.

Das Ethanol wird bei 70 °C/ 400 mbar abdestilliert und der Rückstand anschließend bei 20 mbar/86 °C 3 Stunden nachgetrocknet.

### Vergleichsbeispiel B: Zweistufige Umfällung von PA 1010

Man fällt entsprechend Beispiel A 50 kg eines durch Polykondensation von 1,10-Decandiamin und Sebacinsäure erhaltenen PA 1010-Musters mit folgenden Daten um: ηᵣₑₗ = 1.84, [COOH] = 62 mmol/kg, [NH₂] = 55 mmol/kg.

Die Fällbedingungen werden gegenüber Beispiel A folgendermaßen abgeändert:
Lösetemperatur: 155 °C, Keimbildungstemperatur/Zeit: 128 °C/60 min
Fälltemperatur: 120 °C, Fällungszeit: 1 Stunde, Rührerdrehzahl: 90 Upm

### Vergleichsbeispiel C: Zweistufige Umfällung von PA 1212

Man fällt entsprechend Beispiel A 50 kg eines durch Polykondensation von 1,10-Decandiamin und Dodecandisäure erhaltenen PA 1212-Granulatmusters mit folgenden Daten um: ηᵣₑₗ = 1.80, [COOH] = 3 mmol/kg, [NH₂] = 107 mmol/kg.

Die Fällbedingungen werden gegenüber Beispiel A folgendermaßen abgeändert:
Lösetemperatur: 155 °C, Keimbildungstemperatur: 123 °C, Keimbildungszeit: 60 min
Fälltemperatur: 117 °C, Fällungszeit: 60 Minuten, Rührerdrehzahl: 110 Upm

**Vergleichsbeispiel D**: Einstufige Umfällung von ungeregeltem PA 12 gemäß DE-A 3510690 in Gegenwart von Weißpigment

50 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH₂ sowie 3kg Titandioxidpigment (Kerr-McGee R-FK 3) werden mit 310 L Ethanol, vergällt mit 2-Butanon und 1 % Wassergehalt, innerhalb von 5 Stunden in einem 3 m³-Rührkessel (d = 160 cm) auf 152 °C gebracht und unter Rühren (Blattrührer, d = 80 cm, Drehzahl = 80 Upm) 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten, bis bei 108 °C die Fällung, erkennbar an der Wärmeentwicklung, eingesetzt. Die Destillationsgeschwindigkeit wird soweit erhöht, dass die Innentemperatur nicht über 109.7 °C ansteigt. Nach 20 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt.

Das Ethanol wird bei 70 °C/500 mbar abdestilliert, und der Rückstand anschließend bei 20 mbar/86 °C 3 Stunden nachgetrocknet.

Im folgenden wird die Herstellung von Polyamidfeinpulvern mit hoher Schüttdichte und hoher BET-Oberfläche, anhand von Beispielen erläutert. Die Ergebnisse sind in Tabelle 1 zusammengefasst.

**Beispiel 1:** Einstufige Umfällung von ungeregeltem PA 12. analog zu DE-A 3510690 jedoch unter Zusatz der Suspension S1.

50 kg ungeregeltes, durch hydrolytische Polymerisation hergestelltes PA 12 mit einer relativen Lösungsviskosität von 1.62 und einem Endgruppengehalt von 75 mmol/kg COOH bzw. 69 mmol/kg NH₂ werden mit 290 L Ethanol, vergällt mit 2-Butanon und 1 % Wassergehalt, und 17,4 kg S1 innerhalb von 5 Stunden in einem 0,8 m³-Rührkessel auf 145 °C gebracht und unter Rühren (Blattrührer, d = 80 cm, Drehzahl = 85 Upm, 1 Stunde bei dieser Temperatur belassen. Anschließend wird die Manteltemperatur auf 124 °C reduziert und unter kontinuierlichem Abdestillieren des Ethanols mit einer Kühlrate von 25 K/h bei der derselben Rührerdrehzahl die Innentemperatur auf 125 °C gebracht. Von jetzt an wird bei gleicher Kühlrate die Manteltemperatur 2K - 3 K unter der Innentemperatur gehalten, bis bei 109 °C die Fällung, erkennbar an der Wärmeentwicklung, eingesetzt. Die Destillationsgeschwindigkeit wird soweit erhöht, dass die Innentemperatur nicht über 109.3 °C ansteigt. Nach 20 Minuten fällt die Innentemperatur ab, was das Ende der Fällung anzeigt. Durch weiteres Abdestillieren und Kühlung über den Mantel wird die Temperatur der Suspension auf 45 °C gebracht und die Suspension danach in einen Schaufeltrockner überführt. Das Ethanol wird bei 70 °C/500 mbar abdestilliert, und der Rückstand anschließend bei 20 mbar/86 °C 3 Stunden nachgetrocknet.

### Beispiel 2: Einstufige Umfällung von ungeregeltem PA 12 unter Zusatz der Suspension S2.

Verfahren wurde analog Beispiel 1. Es wurden 17,4 kg der Suspension S2 verwendet

### Beispiel 3: Einstufige Umfällung von ungeregeltem PA 12 unter Zusatz der Suspension S2.

Verfahren wurde analog Beispiel 1. Es wurden 34,8 kg der Suspension S2 verwendet. Die Ethanolmenge des Ansatzes wurde von 290 L auf 275 L reduziert.

### Beispiel 4: Einstufige Umfällung von ungeregeltem PA 12 unter Zusatz der Suspension S3.

Verfahren wurde analog Beispiel 1. Es wurden 17,4 kg der Suspension S3 verwendet

### Beispiel 5: Einstufige Umfällung von ungeregeltem PA 12 unter Zusatz der Suspension S3.

Verfahren wurde analog Beispiel 1. Es wurden 34,8 kg der Suspension S3 verwendet. Die Ethanolmenge des Ansatzes wurde von 290 L auf 275 L reduziert.

### Beispiel 6: Einstufige Umfällung von ungeregeltem PA 12 unter Zusatz der Suspension S4.

Verfahren wurde analog Beispiel 1. Es wurden 17,4 kg der Suspension S4 verwendet

### Beispiel 7: Einstufige Umfällung von ungeregeltem PA 12 unter Zusatz der Suspension S5.

Verfahren wurde analog Beispiel 1. Es wurden 17,4 kg der Suspension S5 verwendet

### Beispiel 8: Einstufige Umfällung von ungeregeltem PA 1010 unter Zusatz der Suspension S2.

Man fällt entsprechend Beispiel 1 50 kg eines durch Polykondensation von 1,10-Decandiamin und Sebacinsäure erhaltenen PA 1010-Musters mit folgenden Kenndaten um: ηᵣₑₗ = 1.84, [COOH] = 62 mmol/kg, [NH₂] = 55 mmol/kg.

Die Fällbedingungen werden gegenüber Beispiel 1 folgendermaßen abgeändert:
Fälltemperatur: 120 °C, Fällungszeit: 2 Stunden, Rührerdrehzahl: 90 Upm
Es wurden 17,4 kg der Suspension S2 verwendet.

### Beispiel 9: Einstufige Umfällung von ungeregeltem PA 1012 unter Zusatz der Suspension S2.

Man fällt entsprechend Beispiel 1 50 kg eines durch Polykondensation von 1,10-Decandiamin und Dodecandisäure erhaltenen PA 1012-Granulatmusters mit folgenden Daten um: ηᵣₑₗ = 1.76, [COOH] = 46 mmol/kg, [NH₂] = 65 mmol/kg.

Fällbedingungen werden gegenüber Beispiel 1 folgendermaßen abgeändert:
Lösetemperatur: 155 °C, Fälltemperatur: 123 °C,
Fällungszeit: 40 Minuten,Rührerdrehzahl: 110 Upm

Es würde 17,4 kg der Suspension S2 verwendet.

### Beispiel 10: Einstufige Umfällung von ungeregeltem PA 1012 unter Zusatz der Suspension S2.

Man fällt entsprechend Beispiel 1 400 kg eines durch Polykondensation von 1,10-Decandiamin und Dodecandisäure erhaltenen PA 1012-Granulatmusters mit folgenden Daten um: ηᵣₑₗ = 1.80, [COOH] = 3 mmol/kg, [NH₂] = 107 mmol/kg.

Fällbedingungen werden gegenüber Beispiel 1 folgendermaßen abgeändert:
Lösetemperatur: 155 °C, Fälltemperatur: 117 °C,
Fällungszeit: 60 Minuten,
Rührerdrehzahl: 110 Upm

Es wurden 17,4 kg der Suspension S2 verwendet

**Tabelle 1:**

| | η-rel | BET (m²/g) | <10% | <50% | <90% | SD g/l |
|---|---|---|---|---|---|---|
| Beispiel 1 | 1,69 | 12,3 | 16 | 33 | 55 | 383 |
| Beispiel 2 | 1,67 | 16,3 | 15 | 28 | 51 | 344 |
| Beispiel 3 | 1,70 | 19,70 | 12 | 36 | 70 | 431 |
| Beispiel 4 | 1,68 | 15,3 | 12 | 29 | 52 | 382 |
| Beispiel 5 | 1,68 | 19,3 | 17 | 41 | 80 | 320 |
| Beispiel 6 | 1,64 | 20,3 | 17 | 42 | 74 | 310 |
| Beispiel 7 | 1,68 | 15,3 | 14 | 29 | 53 | 380 |
| Beispiel8 | 1,82 | 15,7 | 21 | 36 | 75 | 381 |
| Beispiel9 | 1,75 | 17,1 | 19 | 34 | 76 | 379 |
| Beispiel 10 | 1,79 | 16,5 | 23 | 42 | 73 | 370 |
| VgLBsp: A | 1,60 | 2,60 | 78 | 137 | 211 | 432 |
| Vgl.Bsp. B | 1,81 | 2,1 | 50 | 78 | 120 | 440 |
| Vgl.Bsp.C | 1,79 | 2,5 | 50 | 96 | 210 | 480 |
| VgLBsp. D | 1,61 | 2,8 | 32 | 71 | 101 | 493 |

| | | | | | | |
|---|---|---|---|---|---|---|
| ηrel = spezifische Viskosität als Maß für das Molekulargewicht; BET = Oberfläche des Polyamidpulvers in m²/g; < 10% = integrale Korngrößenverteilung, bei der 10 % unter dem angegebenen Durchmesser liegen; < 50% = integrale Korngrößenverteilung, bei der 50 % unter dem angegebenen Durchmesser liegen; < 90% = integrale Korngrößenverteilung, bei der 90 % unter dem angegebenen Durchmesser liegen; SD = Schüttdichte des Polyamidpulvers in g/l | | | | | | |

### Herstellen und Charakterisieren von Granulat.

Die Pulver aus den Beispielen 1, 3 und dem Vergleichsbeispiel A wurden in einem Doppelschneckenextruder ZSK 25 der Firma Coperion bei 220°C und einem Durchsatz von 8 kg/h aufgeschmolzen, stranggepresst und granuliert.

Anschließend wurden Standardprobekörper durch Spritzguss hergestellt und die der Zug -Versuch nach ISO 527 und die Schlagzähigkeit nach ISO 179 le/U bei 23°C und - 40°C bestimmt.

Die Ergebnisse sind in Tabelle 2 zusammengefasst.

**Tabelle 2:**

| Kennwert | Beispiel 1 | Beispiel 2 | Beispiel A |
|---|---|---|---|
| E-Modul MPa | 1821 | 1790 | 1471 |
| Zugfestigkeit am Streckpunkt N/mm² | 51 | 49 | 46 |
| Streckdehnung % | 4,5 | 4,9 | 5,2 |
| Reißfestigkeit N/mm² | 37 | 38 | 36 |
| Reißdehnung % | 150 | 210 | 210 |
| Schlagzähigkeit 23°C kJ/m² | 9 x kein Bruch | 10 x kein Bruch | 8 x kein Bruch |
| Schlagzähigkeit -40°C kJ/m² | 8 x kein Bruch | 8 x kein Bruch | 4 x kein Bruch |

| | | | |
|---|---|---|---|
| E-Modul, Zugfestigkeit, Reißfestigkeit, Streck- und Reißdehnung wurden im Zugdehnungsversuch nach ISO 527 bestimmt. | | | |

Schlagzähigkeit wurde nach ISO 179 le/U bestimmt.

Man erkennt, dass mit erfindungsgemäß hergesellten Polyamidpulvern erhaltene Probekörper über einen höheren E-Modul auch über höhere Zugfestigkeitswerte verfügen.

## Patentansprüche

1. Verfahren zur Herstellung von ultrafeinen Pulvern auf Basis von Polyamiden mit einer Feinheit d₅₀ von kleiner als 70 µm, bei welchem man Polyamide mit einer relativen Lösungsviskosität ηᵣₑₗ im Bereich von 1,5 bis 2,0, gemessen in 0,5%iger m-Kresollösung bei 25 °C, unter Einwirkung von Druck und/oder Temperatur zur Erzeugung einer zumindest teilweisen Lösung mit einem alkoholischen Medium in Gegenwart von anorganischen Partikeln in Berührung bringt und anschließend das Polyamid aus der zumindest teilweisen Lösung ausfällt, **dadurch gekennzeichnet, dass** man eine Suspension einsetzt mit im alkoholischen Medium suspendierten anorganischen Partikeln mit einer mittleren Größe der anorganischen Partikel d₅₀ im Bereich von 0,001 bis 0,8 µm, gemessen in Suspension im alkoholischen Medium als volumengewichteter Medianwert der Peakanalyse mittels statischer oder dynamischer Lichtstreuung.

2. Verfahren nach Anspruch 1, **dadurch gekennzeichnet, dass** man eine Suspension einsetzt von im alkoholischen Medium suspendierten anorganischen Partikeln ausgewählt aus der Gruppe bestehend aus Al₂O₃, TiO₂, ZrO₂, SiO₂, ZnO, Bi₂O₃, CeO₂, Indiumoxid dotiert mit Zinn(IV)oxid, Zinn(IV)oxid dotiert mit Antimonoxid, Indiumoxid dotiert mit Zinkoxid, Bornitrid, Borcarbid, Mischoxiden und Spinellen.

3. Verfahren nach einem der vorhergehenden Ansprüche, **dadurch gekennzeichnet, dass** man eine Suspension einsetzt, erhältlich durch Suspendieren der anorganischen Partikel im alkoholischen Medium unter Einbringung eines Energieeintrages von größer als 1000 kJ/m³.

4. Verfahren nach einem der vorhergehenden Ansprüche, **dadurch gekennzeichnet, dass** man eine Suspension einsetzt, welche einen Gehalt an Partikeln im Bereich von 10 bis 60 Gew.-% aufweist, bezogen auf das gesamte Gewicht der Suspension.

5. Verfahren nach einem der vorhergehenden Ansprüche, **dadurch gekennzeichnet, dass** man eine Suspension einsetzt, die dadurch erhältlich ist, dass man anorganische Partikel mit einer spezifischen Oberfläche im Bereich von 5 bis 200 m²/g im alkoholischen Medium suspendiert.

6. Verfahren nach einem der vorhergehenden Ansprüche, **dadurch gekennzeichnet, dass** man eine Suspension einsetzt, welche dadurch erhältlich ist, dass man die anorganischen Partikel im alkoholischen Medium in Gegenwart eines stabilisierenden Additivs oder einer Mischung von Additiven suspendiert, ausgewählt aus der Gruppe bestehend aus Phosphorsäure, ein- oder zweibasischen Phosphaten, Phosphorsäureestern, Phosphonsäuren, organisch modifizierten Phosphonsäuren, Schwefelsäure, Schwefelsäurederivaten, Salpetersäure, organischen Mineralsäuren, organische Verbindungen mit einem oder mehreren aciden Protonen, Carbonsäuren, Phenolen, basischen organischen Verbindungen und Aminen.

7. Verfahren nach einem der vorhergehenden Ansprüche, **dadurch gekennzeichnet, dass** man als alkoholisches Medium für die Umfällung des Polyamids und/oder die Suspension der anorganischen Partikel einen oder mehrere Alkohole verwendet, die ein Zahlenverhältnis von Sauerstoffatomen zu Kohlenstoffatomen im Bereich von 1:1 bis 1:5 aufweisen.

8. Verfahren nach einem der vorhergehenden Ansprüche, **dadurch gekennzeichnet, dass** man als alkoholisches Medium für die Umfällung des Polyamids und/oder die Suspension der anorganischen Partikel Ethanol verwendet.

9. Ultrafeines Pulver auf Basis von Polyamiden,
erhältlich dadurch, dass man Polyamide mit einer relativen Lösungsviskosität ηᵣₑl im Bereich von 1,5 bis 2,0, gemessen in 0,5%iger m-Kresollösung bei 25 °C, unter Einwirkung von Druck und/oder Temperatur zur Erzeugung einer zumindest teilweisen Lösung mit einer Suspension von anorganischen Partikeln in einem alkoholischen Medium in Berührung bringt und anschließend das Polyamid aus der zumindest teilweisen Lösung ausfällt, **gekennzeichnet durch** eine spezifische Oberfläche nach BET im Bereich von 5 - 100 m²/g;
eine Feinheit d₅₀ von kleiner als 70 µm;
eine Schüttdichte SD im Bereich von 250 bis 1000 g/l; und einen Partikelgehalt von 0,1 bis 80 Gew.-% anorganischer Partikel bezogen auf das Gesamtgewicht des Polyamidpulvers.

10. Verwendung des ultrafeinen Pulvers auf Basis von Polyamiden
nach Anspruch 9 oder erhalten nach dem Verfahren gemäß den Ansprüchen 1 bis 8 als Beschichtungsmittel.

11. Verwendung des ultrafeinen Pulvers auf Basis von Polyamiden nach Anspruch 9 oder erhalten nach dem Verfahren gemäß den Ansprüchen 1 bis 8 zur Herstellung von Formkörpern.

12. Verwendung nach Anspruch 11 zur Herstellung von Formkörpern durch Spritzguss, Extrusion oder Blasformen.

13. Verwendung nach Anspruch 11 zur Herstellung von Formkörpern durch Herstellung eines Granulates und anschließende thermoplastische Weiterverarbeitung mittels Spritzguss, Extrusion oder Blasformen.

## Claims

1. Process for preparing ultrafine powders based on polyamides having a fineness d₅₀ of less than 70 µm by contacting polyamides having a relative solution viscosity ηᵣₑₗ in the range from 1.5 to 2.0, measured in 0.5% m-cresol solution at 25°C, with an alcoholic medium in the presence of inorganic particles under the action of pressure and/or temperature to generate an at least partial solution, and then precipitating the polyamide from the at least partial solution, **characterized in that** a suspension is used which comprises inorganic particles having a mean size of the inorganic particles d₅₀ in the range from 0.001 to 0.8 µm, measured in suspension in the alcoholic medium as the volume-weighted median value of the peak analysis by means of static or dynamic light scattering, suspended in the alcoholic medium.

2. Process according to Claim 1, **characterized in that** a suspension of inorganic particles selected from the group consisting of Al₂O₃, TiO₂, ZrO₂, SiO₂, ZnO, Bi₂O₃, CeO₂, indium oxide doped with tin(IV) oxide, tin(IV) oxide doped with antimony oxide, indium oxide doped with zinc oxide, boron nitride, boron carbide, mixed oxides and spinels, suspended in the alcoholic medium, is used.

3. Process according to one of the preceding claims, **characterized in that** a suspension is used which is obtainable by suspending the inorganic particles in the alcoholic medium with introduction of an energy input of greater than 1000 kJ/m³.

4. Process according to one of the preceding claims, **characterized in that** a suspension is used which has a content of particles in the range from 10 to 60% by weight, based on the total weight of the suspension.

5. Process according to one of the preceding claims, **characterized in that** a suspension is used which is obtainable by suspending inorganic particles having a specific surface area in the range from 5 to 200 m²/g in the alcoholic medium.

6. Process according to one of the preceding claims, **characterized in that** a suspension is used which is obtainable by suspending the inorganic particles in the alcoholic medium in the presence of a stabilizing additive or of a mixture of additives selected from the group consisting of phosphoric acid, mono- or dibasic phosphates, phosphoric esters, phosphonic acids, organically modified phosphonic acids, sulphuric acid, sulphuric acid derivatives, nitric acid, organic mineral acids, organic compounds having one or more acidic protons, carboxylic acids, phenols, basic organic compounds and amines.

7. Process according to one of the preceding claims, **characterized in that** the alcoholic medium used for the reprecipitation of the polyamide and/or the suspension of the inorganic particles is one or more alcohols which have a numerical ratio of oxygen atoms to carbon atoms in the range from 1:1 to 1:5.

8. Process according to one of the preceding claims, **characterized in that** the alcoholic medium used for the reprecipitation of the polyamide and/or the suspension of the inorganic particles is ethanol.

9. Ultrafine powder based on polyamides, obtainable by contacting polyamides having a relative solution viscosity ηᵣₑₗ in the range from 1.5 to 2.0, measured in 0.5% m-cresol solution at 25°C, with a suspension of inorganic particles in an alcoholic medium under the action of pressure and/or temperature to obtain an at least partial solution, and then precipitating the polyamide from the at least partial solution, **characterized by** a specific BET surface area in the range of 5 - 100 m²/g; a fineness d₅₀ of less than 70 µm; an apparent density AD in the range from 250 to 1000 g/l; and a particle content of 0.1 to 80% by weight of inorganic particles based on the total weight of the polyamide powder.

10. Use of the ultrafine powder based on polyamides according to Claim 9 or obtained by the process according to Claims 1 to 8 as a coating composition.

11. Use of the ultrafine powder based on polyamides according to Claim 9 or obtained by the process according to Claims 1 to 8 for producing mouldings.

12. Use according to Claim 11 for producing mouldings by injection moulding, extrusion or blow moulding.

13. Use according to Claim 11 for producing mouldings by producing a granule and subsequent thermoplastic further processing by means of injection moulding, extrusion or blow moulding.

## Revendications

1. Procédé pour la production de poudres ultrafines à base de polyamides, ayant une finesse d₅₀ de moins de 70 µm, dans lequel on met en contact des polyamides ayant une viscosité relative en solution ηᵣₑₗ dans la plage de 1,5 à 2,0, mesurée en solution dans du m-crésol à 0,5 % à 25 °C, sous l'effet de pression et/ou de température, pour la production d'une solution au moins partielle, avec un milieu alcoolique en présence de particules inorganiques et ensuite le polyamide se sépare en précipitant de la solution au moins partielle, **caractérisé en ce qu'**on utilise une suspension avec des particules inorganiques en suspension dans le milieu alcoolique, ayant une taille moyenne des particules inorganiques d₅₀ dans la plage de 0,001 à 0,8 µm, mesurée en suspension dans le milieu alcoolique, en tant que valeur médiane pondérée en volume de l'analyse de pics à l'aide de dispersion statique ou dynamique de la lumière.

2. Procédé selon la revendication 1, **caractérisé en ce qu'**on utilise une suspension de particules inorganiques en suspension dans le milieu alcoolique, choisies dans le groupe constitué par Al₂O₃, TiO₂, ZrO₂, SiO₂, ZnO, Bi₂O₃, CeO₂, l'oxyde d'indium dopé avec de l'oxyde stannique, l'oxyde stannique dopé avec de l'oxyde d'antimoine, l'oxyde d'indium dopé avec de l'oxyde de zinc, le nitrure de bore, le carbure de bore, des oxydes mixtes et des spinelles.

3. Procédé selon l'une quelconque des revendications précédentes, **caractérisé en ce qu'**on utilise une suspension pouvant être obtenue par mise en suspension des particules inorganiques dans le milieu alcoolique avec introduction d'un apport d'énergie de plus de 1 000 kJ/m³.

4. Procédé selon l'une quelconque des revendications précédentes, **caractérisé en ce qu'**on utilise une suspension qui présente une teneur en particules dans la plage de 10 à 60 % en poids, par rapport au poids total de la suspension.

5. Procédé selon l'une quelconque des revendications précédentes, **caractérisé en ce qu'**on utilise une suspension qui peut être obtenue par mise en suspension de particules inorganiques ayant une surface spécifique dans la plage de 5 à 200 m²/g, dans le milieu alcoolique.

6. Procédé selon l'une quelconque des revendications précédentes, **caractérisé en ce qu'**on utilise une suspension qui peut être obtenue par mise en suspension des particules inorganiques dans le milieu alcoolique en présence d'un additif stabilisant ou d'un mélange d'additifs choisis dans le groupe constitué par l'acide phosphorique, des phosphates mono- ou dibasiques, des esters d'acide phosphorique, des acides phosphoniques, des acides phosphoniques à modification organique, l'acide sulfurique, des dérivés d'acide sulfurique, l'acide nitrique, des acides minéraux-organiques, des composés organiques comportant un ou plusieurs protons acides, des acides carboxyliques, des phénols, des composés organiques basiques et des amines.

7. Procédé selon l'une quelconque des revendications précédentes, **caractérisé en ce qu'**on utilise comme milieu alcoolique pour la précipitation du polyamide et/ou la suspension des particules inorganiques, un ou plusieurs alcools qui présentent un rapport en nombre d'atomes d'oxygène aux atomes de carbone dans la plage de 1:1 à 1:5.

8. Procédé selon l'une quelconque des revendications précédentes, **caractérisé en ce qu'**en tant que milieu alcoolique pour la précipitation du polyamide et/ou la suspension des particules inorganiques on utilise l'éthanol.

9. Poudre ultrafine à base de polyamides, pouvant être obtenue par mise en contact de polyamides ayant une viscosité relative en solution ηᵣₑₗ dans la plage de 1,5 à 2,0, mesurée en solution dans du m-crésol à 0,5 % à 25 °C, sous l'effet de pression et/ou de température, pour la production d'une solution au moins partielle, avec une suspension de particules inorganiques dans un milieu alcoolique et ensuite le polyamide se sépare en précipitant de la solution au moins partielle, **caractérisée par** une surface spécifique selon BET dans la plage de 5 à 100 m²/g ; une finesse d₅₀ de moins de 70 µm ; une densité apparente SD dans la plage de 250 à 1 000 g/l ; et une teneur en particules de 0,1 à 80 % en poids de particules inorganiques, par rapport au poids total de la poudre de polyamide.

10. Utilisation de la poudre ultrafine à base de polyamides selon la revendication 9 ou obtenue conformément au procédé selon les revendications 1 à 8, en tant que produit de revêtement.

11. Utilisation de la poudre ultrafine à base de polyamides selon la revendication 9 ou obtenue conformément au procédé selon les revendications 1 à 8, pour la production de corps moulés.

12. Utilisation selon la revendication 11, pour la production de corps moulés par moulage par injection, extrusion ou moulage par soufflage.

13. Utilisation selon la revendication 11, pour la production de corps moulés par préparation d'un produit granulé et transformation thermoplastique subséquente par moulage par injection, extrusion ou moulage par soufflage.
